# EUROPEAN PATENT APPLICATION

(11) **EP 2 800 078 A1**
(43) Date of publication of application: **05.11.2014**
(21) Application number: 12861946.7
(22) Date of filing: 27.12.2012
(51) Int. Cl.: G08B 25/08, G08B 25/10

(54) **METHOD AND APPARATUS FOR PROVIDING HOME SECURITY SERVICE IN COMMUNICATION SYSTEM**

(30) Priority: 28.12.2011 KR 20110144174
(71) Applicant: Samsung Electronics Co., Ltd., Suwon-si, Gyeonggi-do 443-742 (KR)
(72) Inventor: CHO, Chi Hong, Suwon-si Gyeonggi-do 443-370 (KR); KONG, Dong-Keon, Suwon-si Gyeonggi-do 443-470 (KR); KIM, Do-Young, Hwaseong-si Gyeonggi-do 445-170 (KR); KIM, Se-Hoon, Seoul 138-909 (KR); LIM, Nae-Hyun, Seoul 135-240 (KR)
(74) Representative: HGF Limited
(86) International application number: PCT/KR2012/011591
(87) International publication number: WO 2013/100639

(57) **Abstract**

The present invention relates to a method for providing a home security service through an originating terminal in a communication system, the method comprising: transmitting a call connection request signal for requesting a call to a destination terminal; transmitting a home security service request signal for requesting a home security service to be operated and identification information of the originating terminal if a missed-call notification signal is received from the destination terminal; and receiving, through the destination terminal, audio and video signals for video communication transmitted from a television which is connected with the destination terminal through a gateway if authorization for operating the home security service is approved through the identification information.

## Description

### Technical Field

The present invention relates to a communication system, and more particularly, to a method and an apparatus for providing a home security service in a communication system.

### Background Art

There has recently been an increasing demand for a home security service as a result of a rising number of double-income couples and a stronger tendency to leave home for weekend activities.

There is also an increasing number of elderly people living alone, as well as children staying home alone until their parents come back. In the case of an elderly patient, specifically, there is a need for a method for monitoring the status in real time to confirm safety. However, no method is currently available to this end, except for making phone calls for confirmation.

### Detailed Description of the Invention

### Technical Problem

Therefore, the present invention has been made in view of the above-mentioned problems, and an aspect of the present invention is to provide a method and an apparatus for providing a home security service in a communication system.

Another aspect of the present invention is to provide a method and an apparatus for providing a home security service by means of remote control of an originating terminal when a terminating terminal fails to receive a voice call transmitted from the originating terminal in a communication system.

### Technical Solution

In accordance with an aspect of the present invention, there is provided a method for providing a home security service by an originating terminal in a communication system, the method including: transmitting a communication connection request signal, which requests communication, to a terminating terminal; transmitting, when a reception failure notification signal is received from the terminating terminal, a home security service request signal, which requests home security service driving, and identification information of the originating terminal; and receiving, when the home security service driving right is approved based on the identification information, audio and video signals for video communication, which are transmitted from a television connected with the terminating terminal via a gateway, via the terminating terminal.

In accordance with another aspect of the present invention, there is provided a method for providing a home security service by a gateway in a communication system, the method including: receiving a video communication connection request signal from a terminating terminal, when the terminating terminal fails to accept a communication connection request signal transmitted from an originating terminal, and transmitting the video communication connection request signal to a television; receiving a reception failure notification signal from the television, when the television has failed to accept the video communication connection request signal, and delivering the reception failure notification signal to the originating terminal via the terminating terminal; receiving a home security service request signal, which requests home security service driving, and identification information of the originating terminal from the originating terminal; inspecting a home security service driving right of the originating terminal based on the identification information; transmitting a first command message, which orders switching to a video communication mode, to the television when the right of the originating terminal is approved; and receiving audio and video signals for video communication from the television and transmitting the audio and video signals to the originating terminal, the right of which has been approved, via the terminating terminal.

In accordance with another aspect of the present invention, there is provided an originating terminal for providing a home security service in a communication system, the originating terminal including: a transceiver that transmits a communication connection request signal to a terminating terminal, transmits a video communication connection request signal, which requests video communication, to a television connected with the terminating terminal via a gateway when communication connection with the terminating terminal has failed, receives a reception failure notification signal transmitted from the television when video communication connection with the television has failed, transmits a home security service request signal, which requests home security service driving, and identification information of the originating terminal, and receives audio and video signals for video communication from the television when the right has been approved based on the identification information; an input unit that receives an input of the identification information; a display unit that displays the audio and video signals; and a controller that controls the transceiver, the input unit, and the display unit.

In accordance with another aspect of the present invention, there is provided a gateway for providing a home security service in a communication system, the gateway including: a transceiver that receives a video communication connection request signal transmitted from a terminating terminal when the terminating terminal has failed to receive a communication connection request signal transmitted from an originating terminal, transmits the video communication connection request signal to a television, receives a reception failure notification signal from the television when the video communication connection request signal has not been accepted by the television, delivers the reception failure notification signal to the originating terminal, receives a home security service request signal, which requests home security service driving, and identification information of the originating terminal from the originating terminal, transmits a first command message, which orders switching to a video communication mode, to the television when the right of the originating terminal is approved, receives audio and video signals for video communication from the television, and transmits the audio and video signals to the originating terminal, the right of which been approved; a right processing unit that inspects the right of the originating terminal based on the identification information and determines whether or not to approve the right; and a controller that controls the transceiver and the right processing unit.

### Advantageous Effects

The present invention is advantageous in that, when a terminating terminal fails to receive a voice call transmitted from an originating terminal, remote control of the originating terminal is used to provide a home security service, which is particularly beneficial to elderly people or children.

### Brief Description of the Drawings

FIG. 1 illustrates a procedure of providing a home security service in a communication system according to an embodiment of the present invention;
FIG. 2 is a flowchart illustrating a process of receiving a home security service by an originating terminal in a communication system according to an embodiment of the present invention;
FIG. 3 is a flowchart illustrating a process of providing a home security service by a gateway in a communication system according to an embodiment of the present invention;
FIG. 4 illustrates an apparatus for providing a home security service in a communication system according to an embodiment of the present invention; and
FIG. 5 illustrates an exemplary application that is run to provide a home security service in a communication system according to an embodiment of the present invention.

### Mode for Carrying Out the Invention

Hereinafter, exemplary embodiments of the present invention will be described in detail with reference to the accompanying drawings. Further, in the following description of the present invention, a detailed description of known functions and configurations incorporated herein will be omitted when it may make the subject matter of the present invention rather unclear. The terms which will be described below are terms defined in consideration of the functions in the present disclosure, and may be different according to users, intentions of the users, or customs. Therefore, the definitions of the terms should be determined based on the contents throughout the specification.

The present invention will be described in connection with a method and an apparatus for providing a home security service. Specifically, the present invention will be described in connection with a method and an apparatus for providing a home security service by means of remote control of an originating terminal, assuming that a terminating terminal fails to receive a voice call transmitted from the originating terminal.

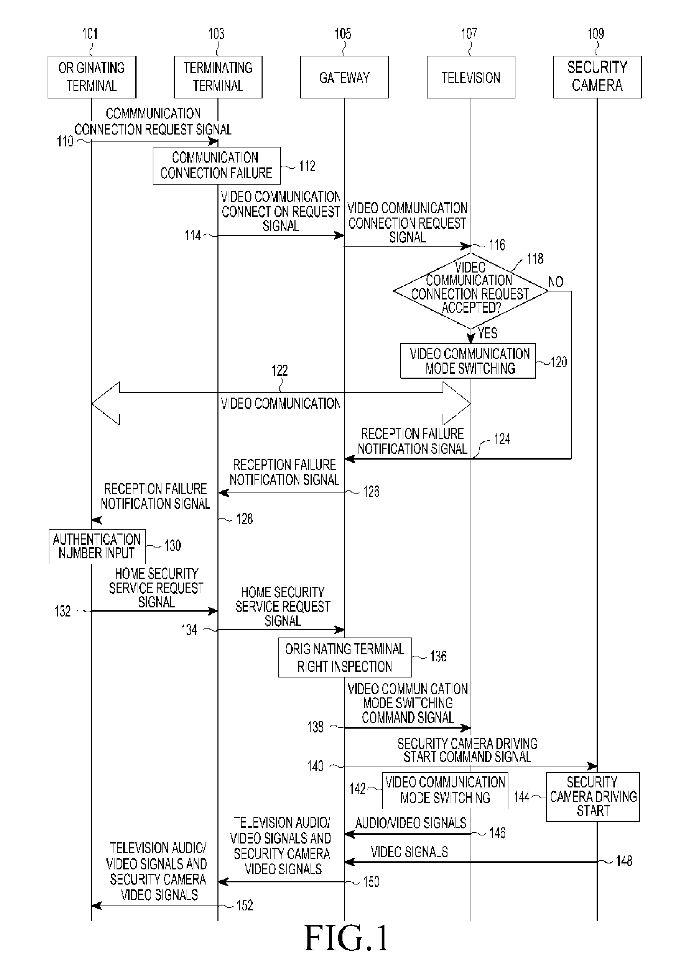

FIG. 1 illustrates a procedure of providing a home security service in a communication system according to an embodiment of the present invention.

Referring to FIG. 1, an originating terminal 101 transmits a communication connection request signal which requests telephone communication, such as a voice call, to an terminating terminal 103 (step 110). When a user staying indoors, such as an elderly person or a child, fails to receive the voice call from the originating terminal 103 and thus fails in communication connection (step 112), the terminating terminal 103 transmits a video communication connection request signal, which requests video communication via a television installed indoors, to a gateway 105 (step 114).

The gateway 105, which has received the video communication connection request signal, delivers the video communication connection request signal to a television 107. It is assumed that the video communication connection request signal can be expressed as a voice call, as in the case of the terminating terminal 103, or as a video call, and that the television 107 supports a video communication mode for video communication.

The television 107 confirms whether the video communication connection request is accepted or not (step 118) and, when the user of the television 107 receives the voice call or the video call and accepts the video communication connection request, switches to the video communication mode (step 120). The television 107 then performs video communication with the originating terminal 101 via the gateway 105 and the terminating terminal 103 (step 122).

However, when the user of the television 107 fails to receive the voice call or the video call within a predetermined time at step 118 (described above), making the video communication connection request denied, the television 107 transmits a reception failure notification signal, which indicates that the video communication connection request signal has not been received, to the gateway 105 (step 124). The gateway 105 transmits the reception failure notification signal to the originating terminal 101 via the terminating terminal 103 (steps 126 and 128) and indicates that the user has failed to receive the voice call or the video call of the television 107.

The originating terminal 101, which has received the reception failure notification signal, transmits a home security service request signal, which requests indoor security service driving, to the terminating terminal 103 (step 132), and the terminating terminal 103 delivers the home security service request signal to the gateway 105 (step 134). Prior to transmitting the home security service request signal, the originating terminal 101 inputs authentication information, which is needed to get approval of a right to request the security service driving (step 130).

The gateway 105, which has received the home security service request signal, checks the authentication number inputted from the originating terminal 101, i.e. authentication number included in the home security service request signal, and determines whether the originating terminal 101 has a right to request the home security service driving (step 136). The process of inspecting the right of the originating terminal at step 136 includes a process of comparing a preset authentication number with the authentication number inputted from the originating terminal 101, and the right of the originating terminal 101 is approved only if the preset authentication number and the inputted authentication number coincide. It is obvious to those skilled in the art that, although it has been assumed as an example that the right of the originating terminal is inspected based on the authentication number, the right of the originating terminal can also be inspected based on the telephone number of the originating terminal. That is, the telephone number of the originating terminal can be compared with a predetermined telephone number to determine whether or not to approve the right of the originating terminal. The preset authentication number and the predetermined telephone number are identification numbers for identifying an originating terminal 101 entitled to request security service driving.

The gateway 105, which has approved the right of the originating terminal 101, transmits a video communication mode switching command signal, which orders switching to a video communication mode regardless of the user's reception, to the television 107, in order to provide a home security service at the request of the originating terminal 101 (step 138) and transmits a security camera driving start command signal, which orders a start of driving of the security camera 109 installed indoors, to the security camera 109 (step 140). It is obvious to those skilled in the art that a number of security cameras can be installed indoors and, besides the television and security camera, any device can be used to provide the security service as long as it is connected to the gateway and is able to relay video or audio signals.

The television 107, which has received the command signal, switches to a video communication mode (step 142) and transmits audio and video signals for video communication to the gateway 105 via a microphone and a camera connected to the television (step 146). The security camera 109, which has received the command signal, starts security camera driving (step 144) and transmits the taken video signals to the gateway 105 (step 148).

The gateway 105, which has received the audio and video signals from the television 107 and the security camera 109, transmits the received signals, i.e. television audio/video signals and security camera video signals, to the originating terminal 101 via the terminating terminal 103 (steps 150 and 152).

Therefore, even if the user staying indoors cannot receive a voice call of the terminating terminal and an audio call or a video call of the television 107, the originating terminal 101 can receive the corresponding signals via all devices that are installed indoors and able to relay video or audio signals, so that the originating terminal 101 can confirm in real time whether the user staying indoors is safe or not.

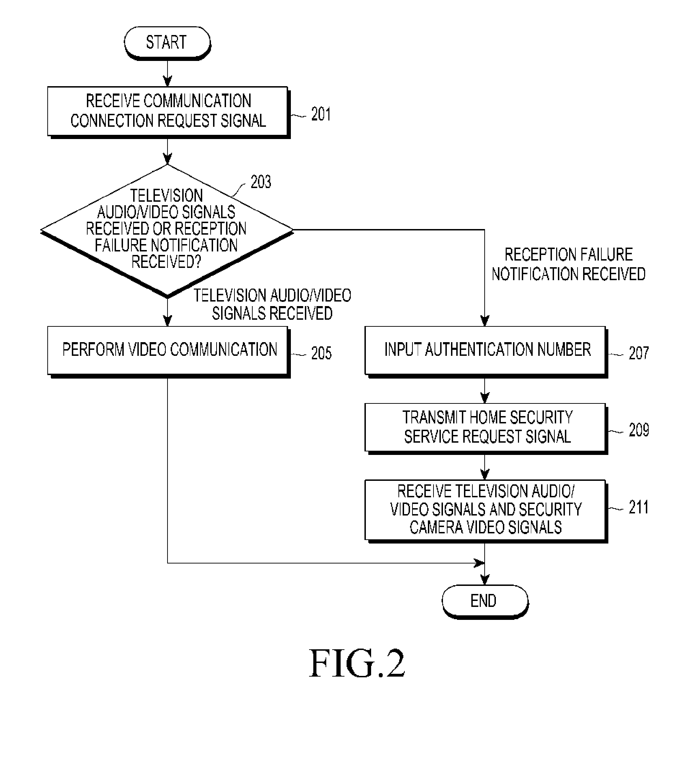

FIG. 2 is a flowchart illustrating a process of receiving a home security service by an originating terminal in a communication system according to an embodiment of the present invention.

Referring to FIG. 2, the originating terminal transmits a communication connection request signal that requests communication, such as a voice call, to a terminating terminal at step 201 and proceeds to step 203.

The originating terminal checks at step 203 whether audio and video signals are received from a television installed indoors or not, or whether a reception failure notification signal, which indicates that no video communication connection request signal has been received, is received from the television or not.

When it is confirmed at step 203 that audio and video signals are received from the television, the originating terminal proceeds to step 205 and performs video communication with the television.

However, when it is confirmed at step 203 that a reception failure notification signal is received from the television, the originating terminal proceeds to step 207, inputs information for getting approval of a right to request security service driving, such as authentication information, and proceeds to step 209. The originating terminal adds the authentication information to a home security service request signal, which requests home security service driving, and transmits the signal at step 209, and proceeds to step 211.

The originating terminal receives audio and video signals, which are received from the television, and video signals, which are received from the security camera, at step 211, thereby receiving a home security service.

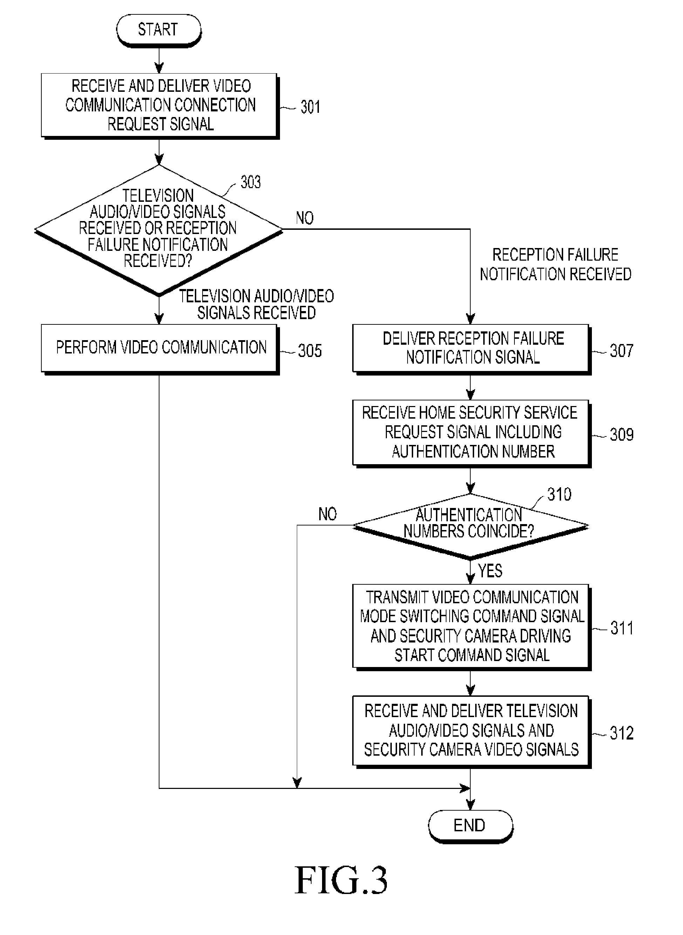

FIG. 3 is a flowchart illustrating a process of providing a home security service by a gateway in a communication system according to an embodiment of the present invention.

Referring to FIG. 3, the gateway receives a video communication connection request signal, which requests video communication via a television, from a terminating terminal which has failed to receive a communication connection request signal that has been transmitted from the originating terminal, such as a voice call, at step 301, delivers the received video communication connection request signal to the television, and proceeds to step 303.

The gateway checks at step 303 whether audio and video signals are received from the television installed indoors or not, or whether a reception failure notification signal, which indicates that no video communication connection request signal has been received, is received from the television or not.

When it is confirmed at step 303 that the originating terminal has received audio and video signals from the television, the gateway proceeds to step 305 and performs video communication with the television.

However, when it is confirmed at step 303 that the originating terminal has received a reception failure notification signal from the television, the gateway proceeds to step 307, delivers the received reception failure notification signal to the originating terminal, and proceeds to step 309.

The gateway receives a home security service request signal, which requests home security service driving, and which includes an authentication number, from the originating terminal at step 309 and proceeds to step 311.

The gateway checks at step 311 whether the received authentication number coincides with a preset authentication number, which is for the purpose of identifying an originating terminal entitled to request security service driving, or not, approves the right of the originating terminal only if the received authentication number coincides with the preset authentication number, and proceeds to step 313. The gateway transmits a video communication mode switching command signal, which orders switching to a video communication mode, to the television at step 313, transmits a security camera driving start command signal, which orders a start of driving of a security camera installed indoors, to the security camera, and proceeds to step 315.

On the other hand, when it is confirmed at step 313 that the received authentication number does not coincide with the preset authentication number, the entire process for providing a home security service is terminated. Although not illustrated in FIG. 3, the gateway can also request that the originating terminal re-input the authentication number, proceed to step 309, and receive a home security service request signal, which requests home security service driving, and which includes the re-inputted authentication number.

The gateway receives audio and video signals, which are transmitted from the television, and video signals, which are transmitted from the security camera, at step 315 and delivers the signals to the originating terminal, thereby providing a home security service.

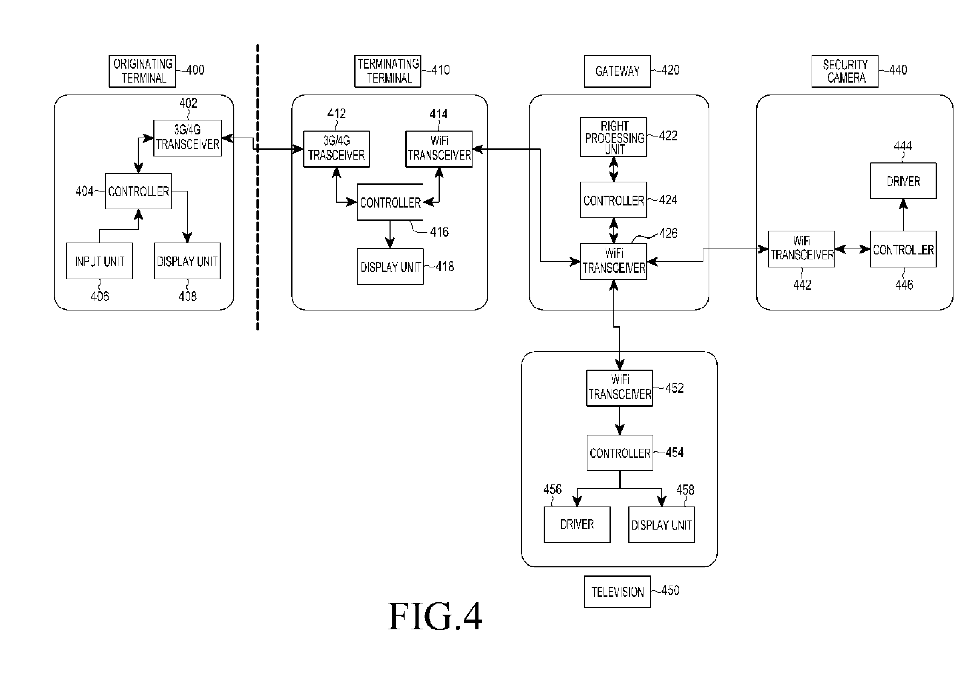

FIG. 4 illustrates an apparatus for providing a home security service in a communication system according to an embodiment of the present invention.

Referring to FIG. 4, the originating terminal 400 includes a 3G (3^{rd} Generation)/4G(4^{th} Generation) transceiver 402, a controller 404, an input unit 406, and a display unit 408; the terminating terminal 410 includes a 3G/4G transceiver 412, a WiFi (wireless LAN) transceiver 414, a controller 416, and a display unit 418; the gateway 420 includes a right processing unit 422, a controller 424, and a WiFi transceiver 426; the security camera 440 includes a WiFi transceiver 442, a driver 444, and a controller 446; and the television 450 includes a WiFi transceiver 452, a controller 454, a driver 456, and a display unit 458.

When the originating terminal 400 receives a communication connection request signal, which request communication with the terminating terminal 410, via the input unit 406, the controller 404 performs control so that the received communication connection request signal is transmitted via the 3G/4G transceiver 402.

When the terminating terminal 410 receives the communication connection request signal via the 3G/4G transceiver 412, the controller 416 performs control so that, when the received communication connection request signal is not received by the user, a video communication connection request signal, which requests video communication via the television, is transmitted via the WiFi transceiver 414.

The gateway 420 receives the video communication connection request signal via the WiFi transceiver 426 and transmits the signal to the television 450; when the television 450 receives the video communication connection request signal via the WiFi transceiver 452, the controller 454 is used to determine whether the received video communication connection request signal is received by the user or not. When it is determined that the received video communication connection request signal is received by the user, the controller 454 of the television 450 performs control so that the driver 456 switches to a video communication mode; and, at the same time, the television 450 performs video communication with the originating terminal 400 via the gateway 420 and the terminating terminal 410.

When it is determined that the received video communication connection request signal fails to be received by the user within a predetermined time, the controller 454 of the television 450 performs control so that a reception failure notification signal, which indicates that the video communication connection request signal has not been received, is transmitted via the WiFi transceiver 452.

When the 3G/4G transceiver 402 of the originating terminal 400 receives the reception failure notification via the terminating terminal 410, the controller 404 performs control so that a message requiring input of an authentication number is outputted via the display unit 418, and the authentication number, which is inputted via the input unit 406, and a home security service request signal, which requests indoor security service driving, are transmitted via the 3G/4G transceiver 402.

When the terminating terminal 410 receives the authentication number and the home security service request signal via the 3G/4G transceiver 412, the controller 416 performs control so that the authentication number and the home security service request signal are transmitted via the WiFi transceiver 414.

When the gateway 420 receives the authentication number and the home security service request signal via the WiFi transceiver 426, the controller 424 performs control so that the right processing unit 422 determines whether the originating terminal 400 has a right to request home security service driving or not. That is, the right processing unit 422 compares the authentication number, which has been received via the WiFi transceiver 426, and a preset authentication number, which is for the purpose of identifying an originating terminal 400 entitled to request security service driving, and approves the right of the originating terminal 400 to request home security service driving only if the received authentication number coincides with the preset authentication number.

When the right processing unit 422 approves the right of the originating terminal 400, the controller 424 of the gateway 420 performs control so that a video communication mode switching command signal, which commands the television 107 to switch to a video communication mode, and a security camera driving start command signal, which orders a start of driving of the security camera 440, are transmitted via the WiFi transceiver 426. However, when the right processing unit 422 does not approve the right of the originating terminal 400 because the received authentication number and the preset authentication number do not coincide, the controller 424 of the gateway 420 performs control so that a signal requesting that the originating terminal re-input the authentication number is transmitted via the WiFi transceiver 426.

When the television 450 receives the video communication mode switching command signal via the WiFi transceiver 452, the controller 454 performs control so that audio and video signals for video communication, which are stored in the driver 456, are transmitted via the WiFi transceiver 452.

When the security camera 109 receives the security camera driving start command signal via the WiFi transceiver 442, the controller 454 performs control so that the video signals stored in the driver 456 are transmitted via the WiFi transceiver 442.

Thereafter, when the gateway 420 receives the television audio/video signals and security camera video signals via the WiFi transceiver 426, the controller 424 performs control so that the received audio and video signals are transmitted via the WiFi transceiver 426. The audio and video signals, which are transmitted from the gateway 420, are finally received by the originating terminal 400 via the terminating terminal 410.

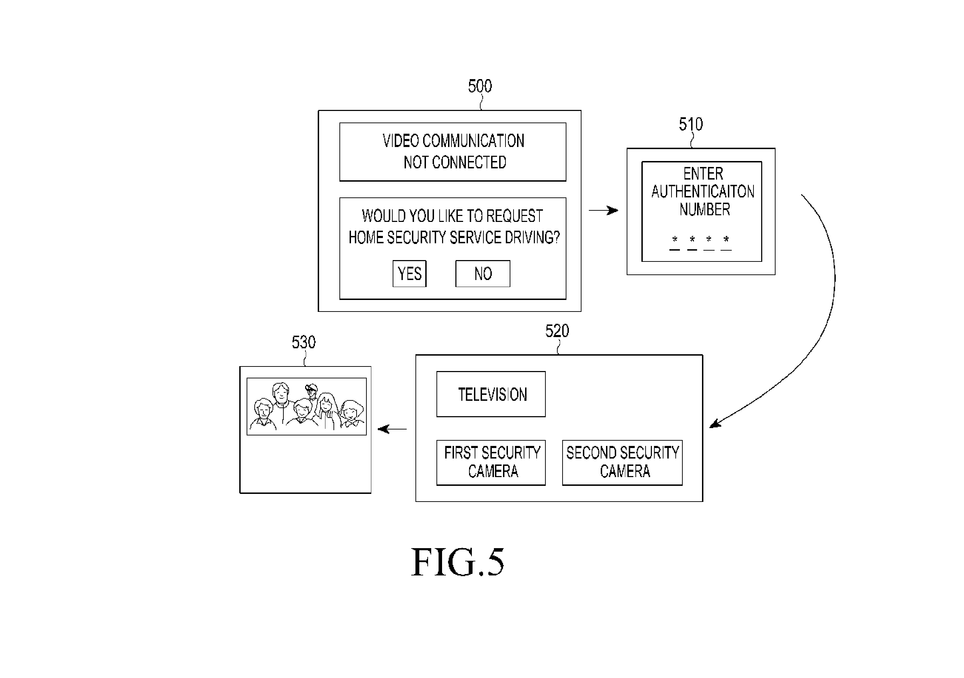

FIG. 5 illustrates an exemplary application that is run to provide a home security service in a communication system according to an embodiment of the present invention.

Referring to FIG. 5, when a user staying indoors fails to receive a communication connection request signal, such as a voice call, of a terminating terminal, the terminating terminal transmits a video communication connection request signal, which requests video communication, such as a voice call or a video call, to a television installed indoors. However, if the user also fails to receive the voice call or the video call of the television, the originating terminal receives a message "Video communication not connected" and a message "Would you like to request home security service driving?" as indicated by reference numeral 500.

If the originator of the originating terminal enters "Yes", the screen displays the next message "Enter authentication number" as indicated by reference numeral 510. If the originator enters the authentication number, audio and video signals received from the television and first and second security cameras, which are installed indoors, are displayed on the screen as indicated by reference numerals 520 and 530.

Although the embodiment has been described in the detailed description of the present disclosure, the present disclosure may be modified in various forms without departing from the scope of the present disclosure. Therefore, the scope of the present disclosure is not limited to the embodiment described above, and should be defined by the accompanying claims and the equivalents of the claims.

## Claims

1. A method for providing a home security service by an originating terminal in a communication system, the method comprising:
transmitting a communication connection request signal, which requests communication, to a terminating terminal;
transmitting, when a reception failure notification signal is received from the terminating terminal, a home security service request signal, which requests home security service driving, and identification information of the originating terminal; and
receiving, when the home security service driving right is approved based on the identification information, audio and video signals for video communication, which are transmitted from a television connected with the terminating terminal via a gateway, via the terminating terminal.

2. The method as claimed in claim 1, further comprising receiving, when the video communication connection request signal is received via the television, the audio and video signals for video communication, which are transmitted from the television, via the terminating terminal.

3. The method as claimed in claim 1, further comprising receiving, when the home security service driving right is approved based on the identification information, video signals taken from at least one security camera provided with the home security service and connected with the terminating terminal via the gateway.

4. The method as claimed in claim 1, wherein the identification information is at least one of a telephone number of the originating terminal and a preset authentication number.

5. A method for providing a home security service by a gateway in a communication system, the method comprising:
receiving a video communication connection request signal from a terminating terminal, when the terminating terminal fails to accept a communication connection request signal transmitted from an originating terminal, and transmitting the video communication connection request signal to a television;
receiving a reception failure notification signal from the television, when the television has failed to accept the video communication connection request signal, and delivering the reception failure notification signal to the originating terminal via the terminating terminal;
receiving a home security service request signal, which requests home security service driving, and identification information of the originating terminal from the originating terminal;
inspecting a home security service driving right of the originating terminal based on the identification information;
transmitting a first command message, which orders switching to a video communication mode, to the television when the right of the originating terminal is approved; and
receiving audio and video signals for video communication from the television and transmitting the audio and video signals to the originating terminal, the right of which has been approved, via the terminating terminal.

6. The method as claimed in claim 5, further comprising receiving the audio and video signals for video communication from the television when the television accepts the video communication connection request signal.

7. The method as claimed in claim 5, further comprising:
transmitting a second command message, which orders a start of driving, to at least one security camera provided with the home security service when the right of the originating terminal is approved; and
receiving video images taken from the at least one security camera and transmitting the video signals to the originating terminal via the terminating terminal.

8. The method as claimed in claim 5, wherein the identification information is at least one of a telephone number of the originating terminal and a preset authentication number.

9. The method as claimed in claim 5, wherein the inspecting a home security service driving right of the originating terminal based on the identification information comprises comparing the identification information of the originating terminal with an authentication number stored in the gateway, and
the right of the originating terminal is approved when the identification number of the originating terminal and the authentication number coincide.

10. An originating terminal for providing a home security service in a communication system, the originating terminal comprising:
a transceiver that transmits a communication connection request signal to a terminating terminal, transmits a video communication connection request signal, which requests video communication, to a television connected with the terminating terminal via a gateway when communication connection with the terminating terminal has failed, receives a reception failure notification signal transmitted from the television when video communication connection with the television has failed, transmits a home security service request signal, which requests home security service driving, and identification information of the originating terminal, and receives audio and video signals for video communication from the television when the right has been approved based on the identification information;
an input unit that receives an input of the identification information;
a display unit that displays the audio and video signals; and
a controller that controls the transceiver, the input unit, and the display unit.

11. The originating terminal as claimed in claim 10, wherein the transceiver receives audio and video signals for video communication, which are transmitted from the television, via the terminating terminal when the video communication connection request signal has been received via the television.

12. The originating terminal as claimed in claim 10, wherein the transceiver receives video signals taken from at least one security camera provided with the home security service and connected with the terminating terminal via the gateway, when the home security service driving right has been approved based on the identification information.

13. The originating terminal as claimed in claim 10, wherein the identification information is at least one of a telephone number of the originating terminal and a preset authentication number.

14. A gateway for providing a home security service in a communication system, the gateway comprising:
a transceiver that receives a video communication connection request signal transmitted from a terminating terminal when the terminating terminal has failed to receive a communication connection request signal transmitted from an originating terminal, transmits the video communication connection request signal to a television, receives a reception failure notification signal from the television when the video communication connection request signal has not been accepted by the television, delivers the reception failure notification signal to the originating terminal, receives a home security service request signal, which requests home security service driving, and identification information of the originating terminal from the originating terminal, transmits a first command message, which orders switching to a video communication mode, to the television when the right of the originating terminal is approved, receives audio and video signals for video communication from the television, and transmits the audio and video signals to the originating terminal, the right of which been approved;
a right processing unit that inspects the right of the originating terminal based on the identification information and determines whether or not to approve the right; and
a controller that controls the transceiver and the right processing unit.

15. The gateway as claimed in claim 14, wherein the transceiver receives the audio and video signals for video communication from the television when the video communication connection request signal is accepted by the television.

16. The gateway as claimed in claim 14, wherein the transceiver transmits a second command message, which orders a start of driving, to at least one security camera provided with the home security service, when the right of the originating terminal is approved, receives video signals taken from the at least one security camera, and transmits the video signals to the originating terminal via the terminating terminal.

17. The gateway as claimed in claim 14, wherein the identification information is at least one of a telephone number of the originating terminal and a preset authentication number.

18. The gateway as claimed in claim 14, wherein the right processing unit compares the identification information of the originating terminal with an authentication number stored in the gateway and, when the identification number of the originating terminal and the authentication number coincide, approves the right of the originating terminal.
